Europäisches Patentamt

European Patent Office

Office européen des brevets

(19)

(11) EP 0 855 611 A1

## (12) DEMANDE DE BREVET EUROPEEN

(43) Date de publication:
29.07.1998 Bulletin 1998/31

(51) Int Cl.6: G02F 1/015

(21) Numéro de dépôt: 98400126.3

(22) Date de dépôt: 22.01.1998

(84) Etats contractants désignés:
AT BE CH DE DK ES FI FR GB GR IE IT LI LU MC NL PT SE
Etats d'extension désignés:
AL LT LV MK RO SI

(30) Priorité: 23.01.1997 FR 9700682

(71) Demandeur: ALCATEL ALSTHOM COMPAGNIE GENERALE D'ELECTRICITE
75008 Paris (FR)

(72) Inventeurs:
• Brindel, Patrick
  91310 Longpont-sur-Orge (FR)
• Bigo, Sébastien
  91120 Palaiseau (FR)

(74) Mandataire: Smith, Bradford Lee et al
COMPAGNIE FINANCIERE ALCATEL
Dépt. Propr. Industrielle,
30, avenue Kléber
75116 Paris (FR)

(54) **Procédé de modulation et modulateur optique à semiconducteur**

(57)    Selon cette invention on injecte simultanément une onde à moduler (WE) et une onde de commande (WC) de nature optique dans le guide d'ondes (4) d'une diode (2) apte à constituer la partie semi-conductrice d'un modulateur à électroabsorption, l'impédance (R) présente aux bornes de cette diode étant suffisamment élevée pour permettre à une modulation d'amplitude de l'onde de commande d'être transférée à l'onde à moduler.

Cette invention s'applique notamment dans les systèmes de télécommunications à fibres optiques, notamment pour la resynchronisation de solitons.

FIG. 1

EP 0 855 611 A1

## Description

La présente invention a pour objet un modulateur apte à moduler une onde optique en amplitude ou à modifier une modulation d'amplitude préexistante d'une telle onde.

On entend ici par modulation toute variation de l'amplitude de cette onde au cours du temps. Dans le cas typique où la modulation a pour but de permettre une transmission d'information, les éléments d'information peuvent être représentés directement par les valeurs instantanées de cette amplitude. La modulation peut cependant aussi mettre une onde optique sous la forme d'une succession d'impulsions, les éléments d'information étant alors représentés par les intervalles entre ces impulsions.

Cette invention trouve notamment application dans certains cas où un traitement doit être effectué à l'aide d'un modulateur sur des signaux optiques particulièrement brefs ou rapides. Ceci exige que ce modulateur soit également rapide c'est à dire qu'il ait des temps de réponse également brefs. Sa bande passante atteint alors les fréquences élevées correspondantes. De tels cas se produisent dans les réseaux de transmission à fibres optiques dans lesquels des informations à transmettre sont représentées par des impulsions rythmées très brèves constituant des solitons.

Divers types de modulateurs optiques rapides sont connus.

Un premier type de tels modulateurs est le modulateur à életroabsorption qui comporte une diode semiconductrice polarisée en inverse. Cette diode reçoit l'onde optique à moduler et un signal de commande de nature électrique. Sa bande passante est malheureusement limitée aux alentours de 10 ou 20 GHz ce qui est parfois insuffisant. Ce type de modulateur est notamment décrit dans un article de F. Devaux et al "Full polarization insensitivity of a 20 Gb/s strained-MQW Electroabsorption Modulator", IEEE Photonics Technology Letters Vol 6 n° 10, October 1994, p. 1203-1206.

Un second modulateur rapide connu est l'amplificateur à semi-conducteur qui comporte une diode polarisée en direct. Cette diode reçoit l'onde à moduler et un signal de commande de nature électrique. Sa bande passante est malheureusement limitée autour de 20 GHz. Ce type de modulateur est notamment décrit dans un article de J.C. Simon et al, "Gain and Noise characteristics of a 1,5 µm near travelling wave semiconductor laser amplifier" Electronic Letters vol. 25 n° 7, 1989, p 434-436.

Un troisième type de modulateur rapide connu est le miroir optique non linéaire en boucle. Il est connu sous l'acronyme NOLM. Il est constitué à l'aide de fibres optiques et utilise un signal de commande de nature optique. Ce signal est formé optiquement à partir d'une modulation préexistante de l'onde à moduler. Plus particulièrement des impulsions d'horloge sont formées à partir de cette onde par un système optique de récupération d'horloge et elles constituent le signal de commande du modulateur pour réaliser une resynchronisation des impulsions de l'onde à moduler. Ce type de modulateur est notamment décrit dans un article de S. Bigo, O. Audouin et E. Desurvire, "Analysys of soliton in-line regeneration through two-wavelength nonlinear loop mirror as synchronous amplitude/phase modulator" Elect. Letters, 7th December 1995, Vol.31, n° 25 p. 2191. Il présente l'inconvénient d'être complexe, notamment dans le cas où on doit maintenir un état de polarisation préexistant de l'onde à moduler.

Un quatrième modulateur rapide connu est constitué par un absorbeur saturable à réflexion en surface, c'est à dire par une superposition de couches semi-conductrices incluant un réflecteur de Bragg et des puits quantiques. L'une des deux surfaces extérieures est métallisée pour réfléchir la lumière et l'autre est transparente. L'onde à moduler et une onde de commande ayant une autre longueur d'onde et constituant un signal de commande optique sont injectées simultanément à travers la surface transparente. L'onde à moduler est réfléchie partiellement par le réflecteur de Bragg et complètement par la surface métallisée. Grâce notamment à la formation d'interférences sa puissance en sortie est augmentée ou diminuée par une augmentation ou une diminution de la puissance de l'onde de commande. Ce modulateur est décrit dans un article de H. Tsuda, A. Hirano, R. Takahashi, K. Sato, and K. Hagimoto : "3 PS, 2.4 Gbits/s All-Optical Pulse Discrimination Experiment : All-optical Regenerator based on a Highspeed Saturable Absorber Optical Gate", Proc. 21 st Eur. Conf. on Opt. Comm. (ECOC'95-Brussels) pp 949-952. Une mise en oeuvre industrielle de ce type de modulation apparaît devoir être difficile notamment s'il doit être inclus dans un dispositif d'optique intégrée sur substrat semi-conducteur.

La présente invention a notamment pour buts :

- d'élargir de manière simple la bande passante d'un modulateur optique,
- d'éviter notamment pour cela l'utilisation de signaux de modulation de nature électrique,
- de réaliser de manière simple un modulateur optique rapide conservant l'état de polarisation d'une onde à moduler,
- de faciliter l'incorporation d'un modulateur optique rapide dans un dispositif d'optique intégrée,
- de permettre d'une manière simple une resynchronisation des solitons dans un système de communication utilisant des solitons guidés par des fibres optiques de grandes longueurs.

Dans ces buts elle a notamment pour objet un procédé de modulation optique caractérisé par le fait qu'on injecte simultanément et colinéairement une onde à moduler et une onde de commande de nature optique dans un même guide d'ondes formé dans une diode semiconductrice polarisée en inverse de manière que ce guide et cette diode soient aptes à constituer la partie semi-conductrice d'un modulateur à électroabsorption, la longueur d'onde de cette onde de commande étant plus petite que celle de cette onde à moduler, l'impédance présente aux bornes de cette diode étant suffisamment élevée pour permettre à une modulation d'amplitude de l'onde de commande d'être transférée à l'onde à moduler.

A l'aide des figures schématiques ci-jointes on va décrire à titre d'exemple divers modes de mise en oeuvre de cette invention.

Les figures 1 et 2 représentent respectivement un premier et un deuxième modulateurs selon cette invention.

La figure 3 présente deux diagrammes représentatifs des variations du taux d'absorption de l'élément absorbant d'un modulateur en fonction de la longueur d'onde d'une onde optique à moduler, cette longueur d'onde étant portée en abscisses, ces deux diagrammes correspondant respectivement à deux valeurs de la tension de polarisation de ce modulateur, ce modulateur pouvant être du type connu à életroabsorption ou être réalisé selon la présente invention.

La figure 4 représente un dispositif de régénération synchrone tout optique applicable à des solitons et utilisant un modulateur selon la présente invention.

La figure 5 représente un dispositif de récupération d'horloge tout optique utilisable notamment dans le dispositif de régénération de la figure 4 et utilisant un modulateur selon la présente invention.

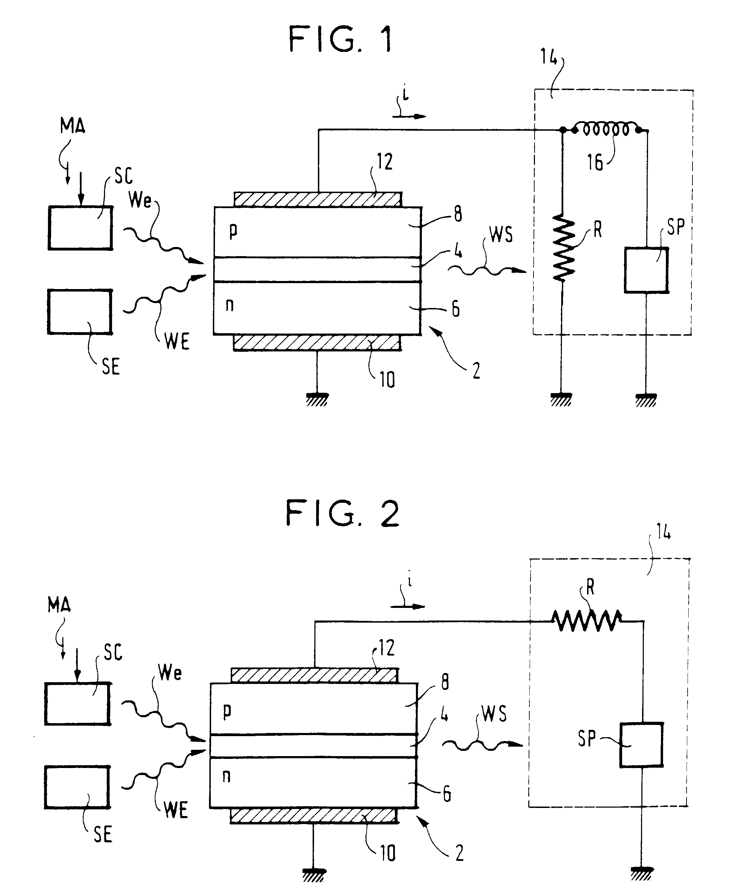

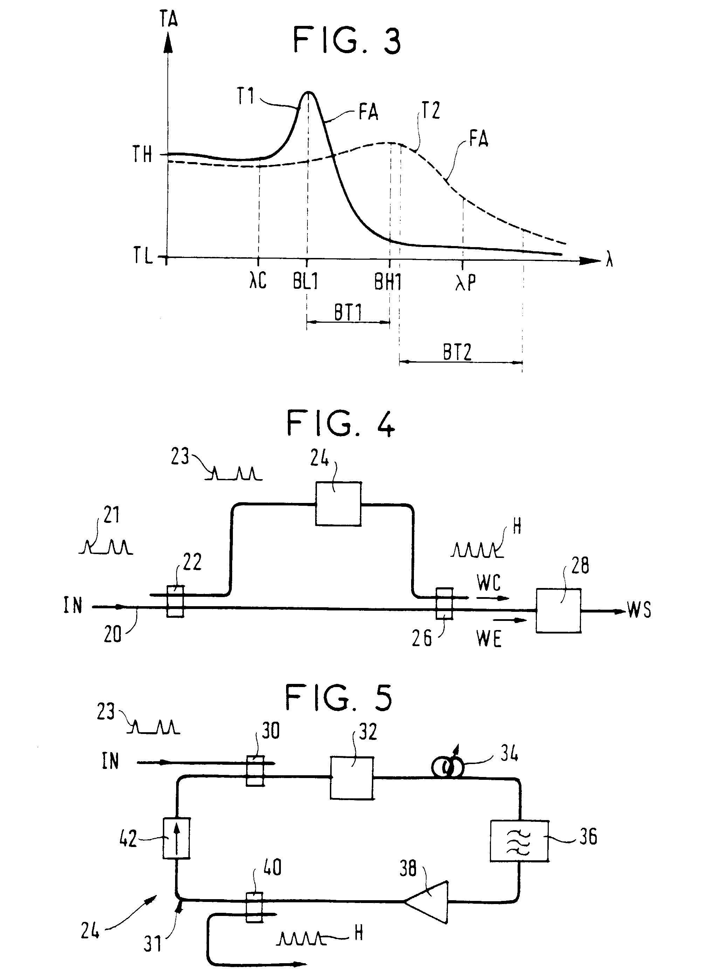

Conformément à la figure 1 ou indifféremment à la figure 2, un modulateur selon cette invention comporte une diode semi-conductrice 2. Cette diode comporte notamment une couche 4 non dopée , c'est à dire non volontairement dopée, située entre une couche 6 à dopage de type n et une couche 8 à dopage de type p. L'indice de réfraction de la couche 4 est supérieur à celui des couches 6 et 8 ce qui permet à des ondes optiques WE et WC d'être guidées par la couche 4. Cette dernière constitue un absorbeur pour ces ondes guidées. Cet absorbeur absorbe la puissance de ces ondes dans une proportion définie par un taux d'absorption TA qui varie en fonction de la longueur d'onde guidée λ. Conformément à la figure 3 le diagramme de cette variation présente un front d'absorption FA. Ce dernier occupe une bande de transition BT1 qui s'étend dans le spectre des longueurs d'onde d'une borne inférieure BL1 ou BL2 à une borne supérieure BH1 ou BH2 selon la valeur d'une différence de potentiels électriques entre les couches 6 et 8. Ce taux d'absorption a sensiblement une valeur maximale TH, ou une valeur décroissante, ou une valeur minimale TL, selon que la longueur d'onde guidée est inférieure à cette borne inférieure, ou croit entre cette borne inférieure et cette borne supérieure, ou est supérieure à cette borne supérieure, respectivement.

Ce modulateur comporte en outre les éléments suivants :

- Des moyens constitués par exemple par une source SE pour injecter une onde optique dans l'absorbeur 4, cette onde optique constituant une onde d'entrée WE devant recevoir une modulation d'amplitude MA pour former une onde de sortie WS. La longueur d'onde de cette onde d'entrée sera appelée ci-après longueur d'onde porteuse et désignée λ P. Elle est au moins transitoirement située dans ladite bande de transition.

- Deux bornes électriques 10 et 12 pour la diode 2.

- Enfin un ensemble électrique 14 externe à la diode 2. Cet ensemble raccorde mutuellement les bornes 10 et 12 de cette diode par une impédance de raccordement R interne à cet ensemble tout en appliquant une tension de polarisation entre ces bornes dans un sens inverse de cette diode. Les éléments indiqués ci-dessus, c'est à dire la diode avec ses bornes, les moyens pour injecter l'onde d'entrée et l'ensemble électrique, sont typiquement ceux qui constituent un modulateur à électroabsorption de type connu, sauf en ce qui concerne la commande de la tension de polarisation et la valeur de l'impédance de raccordement.

Dans le cadre de la présente invention ce modulateur comporte en outre une source de commande SC pour injecter une onde de commande WC dans l'absorbeur 4 en même temps que l'onde d'entrée WE. Cette onde de commande est une onde optique. Elle a une longueur d'onde de commande λ C qui reste toujours inférieure à la borne inférieure BL1 de la bande de transition. Elle a une puissance de commande PC présentant des variations représentatives de la modulation d'amplitude à appliquer à l'onde d'entrée. Par ailleurs l'impédance de raccordement R est choisie suffisamment grande pour que les variations de la puissance de commande réalisent cette modulation d'amplitude en déplaçant ladite bande de transition, par exemple entre deux positions BT1 et BT2 représentées à la figure 3.

Les déplacements de la bande de transition résultent d'une combinaison nouvelle de quatre phénomènes qui étaient connus et qui sont les suivants :

Un premier tel phénomène est lié à une variation, par exemple une augmentation de la puissance de commande, c'est à dire de la puissance de l'onde de commande WC à l'entrée de l'absorbeur. Au moins une partie de la puissance de cette onde est absorbée dans cet absorbeur et constitue une puissance absorbée. Les avantages de cette invention apparaissent dans le cas où la puissance de commande est limitée, c'est à dire où elle est au moins transitoirement inférieure à un seuil de saturation au-delà duquel un accroissement de cette puissance n'entraînerait plus d'augmentation de la puissance absorbée. Au-dessous de ce seuil une augmentation de la puissance de commande entraîne donc une augmentation de la puissance absorbée.

Dans le cadre d'un deuxième phénomène connu la puissance absorbée est utilisée pour créer des paires électron-trou dans l'absorbeur. Les porteurs de charge ainsi créés sont évacués de cet absorbeur par la tension de polarisation qui est appliquée par l'ensemble électrique externe 14 et qui fait régner un champ électrique entre les couches à dopage n et p. L'évacuation de ces porteurs de charge se traduit par la circulation d'un courant électrique dans cet ensemble. Ce courant électrique sera appelé ci-après "photocourant". L'augmentation de la puissance absorbée entraîne une augmentation de l'intensité i de ce photocourant.

Selon un troisième phénomène connu qui est décrit par la loi d'Ohm, la circulation du photocourant dans l'impédance de raccordement influe sur la tension de polarisation qui est appliquée entre les bornes de la diode par l'ensemble électrique présentant cette impédance. Plus précisément l'augmentation du photocourant entraîne une diminution de cette tension et cette diminution de tension est égale au produit de cette augmentation d'intensité multipliée par cette impédance.

La combinaison des premier, deuxième et troisième phénomènes connus ci-dessus est à la base du fonctionnement de photodiodes du commerce dans lesquelles les variations de la tension de polarisation constituent un signal de mesure représentatif de la puissance d'entrée d'une onde absorbée.

La présente invention exploite en outre un quatrième phénomène connu selon lequel la position du front d'absorption dans le spectre des longueurs d'onde dépend de la tension de polarisation. Plus précisément la diminution de la tension de polarisation entraîne un déplacement de ce front vers les petites longueurs d'onde.

Si, par exemple, en se référant à la figure 3, la bande de transition BT2 contenait d'abord la longueur d'onde porteuse $\lambda P$, elle s'étend ensuite en BT1 seulement sur des longueurs d'onde inférieures à cette longueur d'onde porteuse. Il en résulte que l'onde d'entrée était d'abord partiellement absorbée et n'est ensuite pratiquement plus absorbée. Ceci entraîne une augmentation de la puissance de l'onde de sortie dans l'hypothèse où l'onde d'entrée a une puissance constante. Une diminution de la puissance de commande provoquerait dans la même hypothèse une diminution de la puissance de l'onde de sortie.

Le quatrième phénomène décrit ci-dessus est connu sous le nom d'effet Franz-Keldysh ou d'effet Stark confiné selon que l'absorbeur 4 est constitué d'un matériau massif ou d'une succession de puits quantiques et de barrières. Il constitue la base du fonctionnement des modulateurs à électroabsorption du commerce qui ne comportent pas de source de commande optique. Les variations de la tension de polarisation y sont imposées par l'ensemble électrique externe. Il convient qu'elles suivent fidèlement les variations d'un signal de modulation commandant cet ensemble, c'est à dire notamment qu'elles soient aussi indépendantes que possible des variations du photocourant. C'est pourquoi, dans un tel modulateur connu l'impédance de raccordement présentée par l'ensemble électrique externe aux bornes de la diode doit être faible. Au contraire, dans un modulateur selon la présente invention cette impédance doit être relativement forte pour permettre aux variations du photocourant de provoquer des variations suffisamment importantes de la tension de polarisation.

Cette impédance peut être réalisée de diverses manières. Sa valeur peut donc dépendre de la fréquence considérée. Dans ce cas la valeur d'impédance relativement forte mentionnée ci-dessus doit être réalisée dans la bande passante du modulateur, c'est à dire dans la bande de fréquence dans laquelle des variations de la puissance de commande doivent être transmises sous forme de variations de la puissance de l'onde de sortie.

Pour le choix de cette valeur on peut indiquer qu'une relation semble devoir être généralement vérifiée au moins dans la bande passante du modulateur entre d'une part la valeur absolue I z I de l'impédance de raccordement (R) exprimée en ohms et d'autre part l'amplitude $\Delta PC$ des variations de la puissance de commande exprimée en watts. Cette relation s'écrit

$$|z| = \alpha/\Delta PC,$$

$\alpha$ étant un coefficient compris entre 0,05 et 20. Ce coefficient semble devoir être plus particulièrement compris 0,1 et 10 et plus particulièrement encore entre 0,5 et 5.

L'impédance de raccordement présente typiquement la forme d'une résistance R dont la valeur sera également désignée ci-après par la lettre R. Typiquement aussi la puissance de commande varie entre zéro et une valeur maximale PC de sorte que l'amplitude des variations de cette puissance est égale à cette valeur maximale. La relation ci-dessus s'écrit alors R = $\alpha$/PC.

La puissance PC a typiquement une valeur maximale comprise entre 1 et 10 mW et plus particulièrement voisine de 5mW. Il en résulte que la valeur absolue I z I de l'impédance de raccordement dans la bande passante du modulateur est typiquement comprise entre 20 et 500 $\Omega$ et plus particulièrement au moins égale à 50 $\Omega$.

Quant à la tension de polarisation elle est typiquement inférieure à 5V et avantageusement comprise entre 0,5 et 4 V.

De manière générale il doit être compris que la diode 2 est avantageusement constituée par la puce semiconductrice d'un modulateur à électroabsorption de type connu et que les spécialistes peuvent déterminer pour chaque application particulière les valeurs convenables des divers paramètres électriques pour cette application particulière. Pour cela ils peuvent tenir compte, d'une part des propriétés bien connues de ces modulateurs à électroabsorption, d'autre part du rendement K de la conversion de la puissance optique absorbée en intensité de photocourant. Ce rendement K prend de manière typique des valeurs comprises entre 0,5 et 1,5 A.W$^{-1}$.

De préférence l'ensemble électrique 14 comporte :

- une source de tension SP fournissant la tension de polarisation et présentant une impédance interne faible par rapport à l'impédance de raccordement , et

- une résistance de raccordement R constituant cette impédance de raccordement ou une fraction majoritaire de celle ci.

Dans le premier modulateur représenté à la figure 1, la source de tension SP est raccordée aux bornes 10 et 12 de la diode 2 par l'intermédiaire d'une inductance de séparation 16 et la résistance de raccordement R est raccordée en parallèle avec cette source de tension. Cette inductance peut bien entendu être remplacée par d'autres éléments de séparation aptes à transmettre le courant continu tout en séparant la source SP de la diode pour les fréquences comprises dans la bande passante du modulateur.

Dans le deuxième modulateur représenté à la figure 2, la source de tension SP et la résistance de raccordement R sont raccordées en série entre les bornes 10 et 12 de la diode 2.

Conformément à la figure 4 un dispositif de régénération synchrone comporte une fibre optique 20 recevant un train de solitons porteurs d'information 21. Ce train est rythmé à une fréquence F, mais au cours de leur propagation le long d'une ligne, les solitons ont été amplifiés à plusieurs reprises pour compenser les pertes de ligne et ils sont affectés notamment d'une gigue temporelle (jitter). Une partie de l'énergie de ces solitons est dérivée à l'aide d'un coupleur d'entrée 22 pour former un train dérivé 23. Ce dernier est reçu par un dispositif de récupération d'horloge 24 qui est de préférence d'un type tout optique. Le dispositif 24 fournit en réponse une succession régulière d'impulsions d'horloge H dont la fréquence de récurrence est la fréquence F. Ces impulsions sont injectées dans la fibre 20 à l'aide d'un coupleur de mélange 26. En sortie de cette fibre les solitons et les impulsions d'horloge sont reçus par un modulateur 28 réalisé selon la présente invention et ils constituent respectivement pour ce modulateur l'onde d'entrée WE et l'onde de commande WC précédemment mentionnées. L'onde de sortie WS comporte alors un train de solitons portant la même information que le train 21 mais régénéré. Un tel dispositif est décrit dans un article de H.Kubota and M. Nagazawa "Soliton Transmission control in time and frequency domain" IEEE J. Quantum Electron vol. 29, n°7 p. 2189 (1993).

Conformément à la figure 5 un dispositif de récupération d'horloge tel que 24 reçoit un train de solitons tel que le train dérivé 23 par l'intermédiaire d'un coupleur 30 qui injecte ce train dans une boucle de fibre optique 31 constituant un laser à mode bloqué. Cette boucle comporte ensuite, en série bouclée :

- un modulateur 32 réalisé selon la présente invention, le train 23 constituant pour ce modulateur l'onde de commande précédemment mentionnée,

- une ligne à retard 34 dont le retard est ajusté pour faire apparaître une résonance à la fréquence de récurrence F précédemment mentionnée,

- un filtre de fréquence 36 du type passe bande centré sur la longueur d'onde de commande λ C précédemment mentionnée,

- un amplificateur à fibre optique dopée 38,

- un coupleur de sortie 40 qui dérive une partie de la lumière circulant dans la boucle 31 pour constituer les impulsions d'horloge H, et

- un isolateur optique 42 définissant le sens de propagation de la lumière dans la boucle 31.

Un tel dispositif est décrit dans un article de K. Smith and J.K. Lucek "All optical clock recovery using a mode-locked laser", Electron. Lett. Vol. 28 n° 19 p. 1814 (1992).

## Revendications

1. Procédé de modulation optique caractérisé par le fait qu'on injecte simultanément et colinéairement une onde à moduler (WE) et une onde de commande (WC) de nature optique dans un même guide d'ondes (4) formé dans une diode semi-conductrice (2) polarisée en inverse de manière que ce guide et cette diode soient aptes à constituer la partie semi-conductrice d'un modulateur à électroabsorption, la longueur d'onde de cette onde de commande étant plus petite que celle de cette onde à moduler, l'impédance (R) présente aux bornes de cette diode étant suffisamment élevée pour permettre à une modulation d'amplitude de l'onde de commande d'être transférée à l'onde à moduler.

2. Modulateur optique à semi-conducteur comportant :

- une diode semi-conductrice (2) comportant une couche non dopée (4) située entre une couche (6) à dopage de type n et une couche (8) à dopage de type p et permettant à des ondes optiques (WE,WC) d'être guidées par cette couche non dopée, cette couche non dopée constituant un absorbeur pour ces ondes guidées, cet absorbeur ayant un taux d'absorption (TA) présentant une variation en fonction de la longueur d'onde guidée (λ), cette variation présentant un front d'absorption (FA) occupant une bande de transition (BT1) s'étendant d'une borne inférieure (BL1) à une borne supérieure (BH1) dans le spectre des longueurs d'onde, ce taux d'absorption ayant sensiblement une valeur maximale (TH), ou une valeur décroissante, ou une valeur minimale (TL), selon que la longueur d'onde guidée est inférieure à cette borne inférieure, ou croit entre cette borne inférieure et cette borne supérieure, ou est supérieure à cette borne supérieure, respectivement, la position de cette bande de transition dans le spectre des longueurs d'onde étant sensible à un champ électrique présent dans cet absorbeur,

- des moyens (SE) pour injecter une onde optique dans ledit absorbeur, cette onde optique constituant une onde d'entrée (WE) devant recevoir une modulation d'amplitude (MA) pour former une onde de sortie (WS), une longueur d'onde de cette onde d'entrée constituant une longueur d'onde porteuse ($\lambda$ P) et étant au moins transitoirement située dans ladite bande de transition,

- deux bornes électriques (10 et 12) pour ladite diode (2), et

- un ensemble électrique (14) externe à ladite diode, cet ensemble raccordant mutuellement lesdites bornes (10 et 12) de cette diode par une impédance de raccordement (R) interne à cet ensemble tout en appliquant une tension de polarisation entre ces bornes dans un sens inverse de cette diode,

ce modulateur étant caractérisé par le fait qu'il comporte en outre une source de commande (SC) pour injecter une onde de commande (WC) dans le dit absorbeur (4) simultanément et colinéairement avec ladite onde d'entrée (WE), cette onde de commande étant une onde optique ayant une longueur d'onde de commande ($\lambda$ C) restant inférieure à ladite borne inférieure (BL1) de ladite bande de transition et ayant une puissance de commande (PC) limitée présentant des variations représentatives de ladite modulation d'amplitude à appliquer à ladite onde d'entrée, ladite impédance de raccordement (R) étant suffisamment grande pour que lesdites variations de la puissance de commande réalisent cette modulation d'amplitude en déplaçant ladite bande de transition.

3. Modulateur selon la revendication 2, une relation étant vérifiée au moins dans une bande passante dudit modulateur entre d'une part une valeur absolue I z I de ladite impédance de raccordement (R) exprimée en ohms et d'autre part l'amplitude $\Delta$PC des dites variations de la puissance de commande exprimée en watts, cette relation s'écrivant

$$|z| = \alpha/\Delta PC,$$

$\alpha$ étant un coefficient compris entre 0,05 et 20.

4. Modulateur selon la revendication 3, ledit coefficient a étant compris entre 0,1 et 10.

5. Modulateur selon la revendication 2, ladite puissance de commande (PC) ayant une valeur maximale comprise entre 1 et 10 mW.

6. Modulateur selon la revendication 2, une valeur absolue I z I de ladite impédance de raccordement dans une bande passante dudit modulateur étant comprise entre 20 et 500 $\Omega$.

7. Modulateur selon la revendication 2, ladite tension de polarisation étant inférieure à 5 V.

8. Modulateur selon la revendication 2, ledit ensemble électrique (14) comportant :

- une source de tension (SP) fournissant ladite tension de polarisation et présentant une impédance interne faible par rapport à ladite impédance de raccordement , et

- une résistance de raccordement (R) constituant sensiblement ladite impédance de raccordement.

9. Modulateur selon la revendication 8, la dite source de tension (SP) étant raccordée aux bornes (10,12) de ladite diode (2) par l'intermédiaire d'un élément de séparation (16), ladite résistance de raccordement (R) étant raccordée en parallèle avec cette source de tension.

10. Modulateur selon la revendication 8, ladite source de tension (SP) et ladite résistance de raccordement (R) étant raccordées en série entre les bornes (10, 12) de ladite diode (2).

# FIG. 1

# FIG. 2

EP 0 855 611 A1

FIG. 3

FIG. 4

FIG. 5

**Office européen des brevets**

## RAPPORT DE RECHERCHE EUROPEENNE

Numéro de la demande

EP 98 40 0126

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 726 483 A (NEC CORPORATION)<br>* colonne 2, ligne 29 - colonne 3, ligne 10; figure 10A *<br>--- | 1,2 | G02F1/015 |
| A | FR 2 724 778 A (TOSHIBA)<br>* page 11, ligne 20 - page 14, ligne 7; figure 4 *<br>--- | 1,2 | |
| A | US 5 105 240 A (OMURA)<br>* colonne 6, ligne 35 - colonne 7, ligne 30; figure 1A *<br>----- | 1,2 | |

| DOMAINES TECHNIQUES RECHERCHES (Int.Cl.6) |
|---|
| G02F |

Le présent rapport a été établi pour toutes les revendications

| Lieu de la recherche | Date d'achèvement de la recherche | Examinateur |
|---|---|---|
| LA HAYE | 17 avril 1998 | Peeters, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)